# FASCICULE DE BREVET EUROPEEN

(11) **EP 1 147 864 B1**
(45) Date de publication et mention de la délivrance du brevet: **06.07.2005**
(21) Numéro de dépôt: 01108701.2
(22) Date de dépôt: 06.04.2001
(51) Int. Cl.: B26D 1/28, B21F 11/00, B29D 30/46

(54) **Dispositif de coupe à grande vitesse pour couper un renfort de pneumatique**
Hochgeschwindigkeits-Schneidevorrichtung zum Schneiden von Verstärkungselementen für Luftreifen.
High speed cutting device for cutting reinforcing elements for tyres

(30) Priorité: 18.04.2000 FR 0005071
(43) Date de publication de la demande: 24.10.2001
(73) Titulaire: SEDEPRO, 63000 Clermont-Ferrand (FR)
(72) Inventeur: Debroche, Claude, 63118 Cebazat (FR)
(74) Mandataire: Bauvir, Jacques

(56) Documents cités:
- EP-A- 0 745 462
- US-A- 4 914 997
- US-A- 4 941 378
- US-A- 5 281 289
- US-A- 5 655 427

## Description

La présente invention concerne la fabrication des pneumatiques. Plus précisément, elle se rapporte à la fabrication des armatures de renforcement, notamment pour le sommet du pneumatique.

On sait que les pneumatiques sont usuellement renforcés par des monofilaments ou des câbles ou autres assemblages de brins unitaires, que l'on désignera de façon générique par le terme "renfort" dans la présente demande. Un paramètre d'architecture important est l'angle que forment ces renforts par rapport à une référence normalisée bien connue des hommes du métier, à savoir le plan médian perpendiculaire à l'axe de rotation du pneumatique. La présente demande de brevet se rapporte notamment aux renforcements à zéro degré, quelle que soit la localisation précise de ces renforcements dans le pneumatique. Les renforcements peuvent être réalisés en déposant un seul fil individuellement ou en déposant quelques fils simultanément, par groupe de fils parallèles, par exemple une dizaine de fils parallèles. Notons que le terme « fil » vise indistinctement un brin unique comme un monofilament, ou un assemblage de brins unitaires comme un câble, et le terme « renfort » vise aussi indistinctement un fil unique, ou un groupe de fils parallèles. Les fils peuvent être nus ou pré revêtus de caoutchouc ou de toute autre matière apte à rendre les fils collants.

L'état de la technique connaît de nombreux exemples d'utilisation de renforts à zéro degré pour renforcer les flancs ou le sommet des pneumatiques. Mais une telle implantation a pour inconvénient majeur que l'ébauche de pneu en cours de fabrication ne se prête plus ou se prête mal à la ou aux conformations pendant les phases ultérieures de la fabrication du pneu.

Afin d'apporter une solution à ces problèmes de conformation, une technique bien connue consiste à couper les fils à zéro degré en tronçons. On convient d'appeler "tronçon" le morceau de fil compris entre les coupes. Le brevet US 4,791,973 illustre cette technique. Il y est décrit un pneumatique comportant une ceinture incluant des fils à zéro degré. Ceux-ci ne sont pas continus circonférentiellement. Un certain nombre de tronçons se succèdent les uns à la suite des autres le long d'un périmètre.

Le brevet US 5 281 289 décrit un procédé de fabrication d'un pneumatique, dont un renfort est constitué à partir d'un seul fil dont des tronçons successifs sont déposés sur un support rigide.

Ce brevet décrit aussi une machine pour la mise en oeuvre de ce procédé.

Comme il est très difficile de couper à très grande vitesse un renfort en défilement rapide, ce principe conduit à des cadences de pose de renforts à zéro degré beaucoup trop lentes, en particulier si l'on dépose un seul fil à la fois et non pas un groupe de fils parallèles, en bobinant le renfort sur l'ébauche en cours de confection tout en déplaçant une tête de pose du renfort transversalement. Si l'on envisage de déposer une seule nappe, par exemple en enroulant ladite nappe en un tour sur l'ébauche crue pendant son assemblage, il faut préparer à l'avance des incisions souhaitées sur ladite nappe, et cette méthode oblige à prévoir un certain recouvrement à la soudure afin d'assurer la reprise des efforts circonférentiels d'extension.

L'invention a pour objectif de proposer des moyens de coupe très rapides, que ces coupes soient fréquentes comme dans le cas décrit ci-dessus ou que la coupe intervienne seulement à la fin de l'opération concernant un pneumatique, comme dans le cas de renforts à zéro degré en fil continu. L'invention permet d'envisager dans de bonnes conditions de performance industrielle la pose de tronçons de fils pour n'importe quelle application de renforcement.

L'invention propose un procédé de fabrication d'un renforcement pour pneumatique, ledit renforcement étant constitué à partir d'un renfort délivré par des moyens d'alimentation imposant au renfort un mouvement d'avance à une vitesse linéaire donnée dans la direction longitudinale du renfort, consistant à déposer des tronçons dudit renfort sur un support, à retenir lesdits tronçons sur le support par adhérence sur celui-ci, lesdits tronçons étant prélevés en aval des moyens d'alimentation de la façon suivante :
- faire coulisser ledit renfort dans un guide dont un orifice définit un point de coupe,
- entraîner au moyen d'une commande par arbre rotatif un couteau selon une trajectoire fermée quelconque amenant le couteau à passer dans l'environnement du point de coupe, le couteau étant actif au point de coupe tous les n passages, avec n supérieur ou égal à deux.

La coupe à la demande peut se faire par un actionneur adapté. En variante, la construction de la commande est telle que le couteau est actif au point de coupe tous les n passages, n supérieur ou égal à deux.

L'invention propose de faire tourner un couteau à très haute vitesse et, par une cinématique appropriée, de faire en sorte que le couteau ne soit pas actif à chaque passage près du renfort. Dans la mise en oeuvre décrite ci-dessous, l'invention exploite l'agencement connu en soi des pignons satellites existant dans certains réducteurs. Cela permet de faire décrire au couteau une trajectoire comprise dans un plan.

C'est ainsi que l'invention propose une machine de fabrication d'un renforcement pour pneumatique, comportant un distributeur de renfort imposant à un renfort un mouvement d'avance à une vitesse linéaire donnée dans la direction longitudinale du renfort, et un dispositif de coupe comprenant :
- un guide guidant ledit renfort, l'orifice aval dudit guide définissant un point de coupe du renfort,
- un couteau monté sur un disque rotatif
caractérisé en ce que le disque est commandé par une cinématique appropriée pour faire tourner ledit couteau à très haute vitesse et appropriée pour faire en sorte que le couteau ne soit pas actif à chaque passage près du renfort, ledit dispositif de coupe étant agencé de façon à ce que le couteau décrive une trajectoire qui croise le renfort audit point de coupe, et en ce que la machine comporte des moyens d'application recevant le renfort en aval du point de coupe, l'acheminant jusqu'à un point de pose du renfort sur un support de fabrication du renforcement.

L'invention permet une fabrication directe sur un support, à partir de bobines dans lesquelles le renfort est prélevé en continu. Le support dont il est question peut être une forme de révolution sur laquelle on fabrique un bloc sommet, ou un tambour qui supporte le pneu cru en cours de fabrication, ou tout autre support convenable, l'invention ne traitant pas en soi de cet aspect. Pour que le renfort posé reste en place sur le support, il est avantageux que le support soit revêtu d'une couche de caoutchouc cru à laquelle le renfort puisse coller ou adhérer, ou dans laquelle le renfort puisse pénétrer au moins légèrement au fur et à mesure qu'il est amené sur le support.

L'invention sera mieux comprise par la description qui va suivre, donnée à titre non limitatif, en se référant au dessin annexé sur lequel :
la figure 1 est une vue schématique montrant les organes principaux servant à la pose d'un renfort à zéro degré ;
la figure 2 est une vue plus détaillée d'un dispositif de coupe selon l'invention ;
les figures 3 et 4 illustrent la trajectoire de l'outil de coupe selon deux variantes de l'invention,
les figures 5 et 6 illustrent un autre mode de réalisation de l'invention.

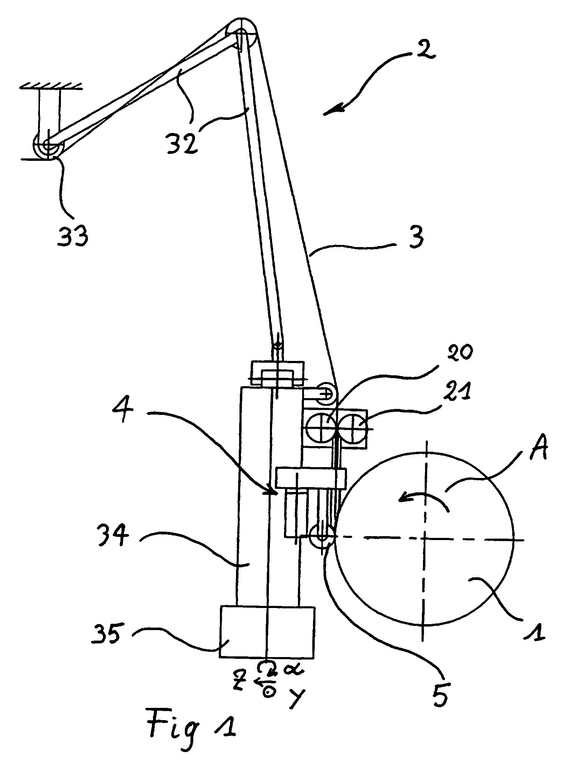

A la figure 1, on aperçoit un support 1 sur lequel on fabrique un renforcement. Ce support pourrait être constitué par tout type de forme définissant la surface sur laquelle on va disposer les tronçons de fils constituant le renforcement, comme par exemple une membrane armée gonflable, ou une forme réglable en diamètre du genre de celle utilisée dans les machines de confection de bloc sommet imposant un profil purement cylindrique, ou une forme galbée transversalement. Le support 1 est déjà revêtu de tous les constituants qu'il doit recevoir avant l'addition du renforcement à zéro degré. Le support 1 est entraîné en rotation dans le sens indiqué par la flèche A.

On voit un distributeur 2 de renfort adapté spécifiquement pour délivrer un seul fil 3, sans que cela ne puisse être interprété comme limitant la portée de l'invention, qui s'étend à tout type de renforts. Le fil 3 est dévidé hors d'une bobine (non représentée). Le fil 3 est engagé sur différentes poulies d'un système de compas 32 lui permettant, à partir d'un point fixe dans l'espace (poulie 33), de rejoindre une tête de pose 34 mobile dans l'espace. Un robot 35 à trois axes (Y, Z, α) permet d'assurer la présentation correcte du fil 3 à tout endroit de la surface du support 1, même quand le support est de forme non cylindrique.

Sur la tête de pose, le fil 3 est motorisé par deux galets 20, 21 entre lesquels il est pincé. Le galet 20 est entraîné par un moteur (non représenté) d'avance du fil 3. Bien entendu, comme cela est devenu classique, le moteur d'avance peut comporter un codeur ou un résolveur. Il est ainsi possible d'imposer au fil 3 une avance linéaire bien précise tout en connaissant en continu la mesure précise de la quantité de fil 3 délivrée aux organes de la machine disposés en aval.

A la sortie des galets 20, 21, le fil 3 est introduit dans un dispositif de coupe 4, installé sur la tête de pose 34. Tout comme le distributeur de fil, le dispositif de coupe est, dans cet exemple, adapté à un renfort constitué par un seul fil. En aval du dispositif de coupe 4, de préférence, un galet d'applique 5 presse le fil 3 contre le support 1 pour le faire pénétrer légèrement dans le caoutchouc dont est revêtu le support 1. Le galet d'applique 5 est représenté fixe au dessin joint, bien qu'il puisse être monté sur une suspension élastique dans la direction radiale par rapport au support.

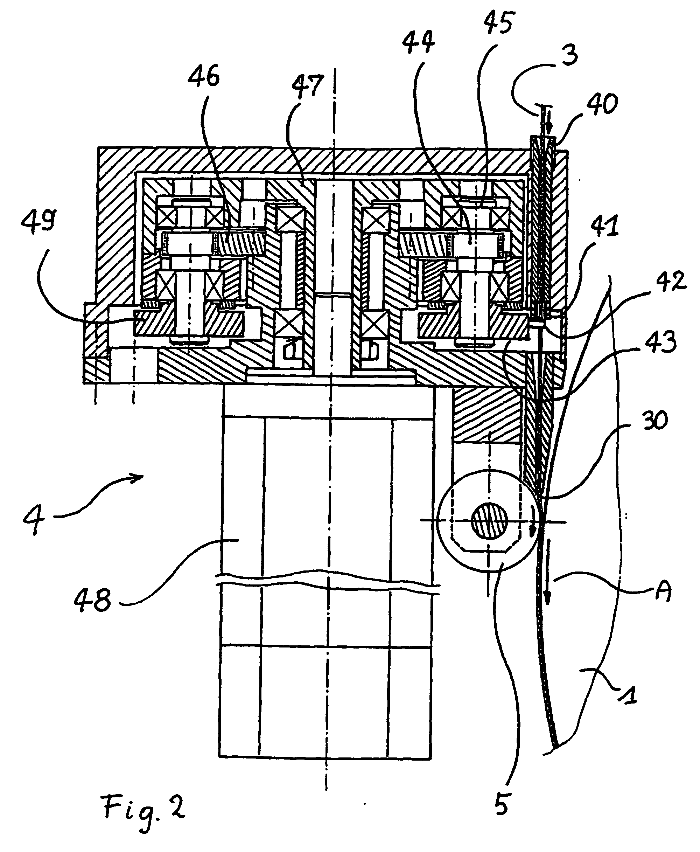

A la figure 2, on voit un guide tubulaire 40, dont l'extrémité renforcée 41 détermine la position du point de coupe et maintient le fil 3 lorsqu'il est tranché. Un couteau 42 est monté sur un disque 43 solidaire d'un pignon satellite 44 (le disque 43 et le pignon satellite 44 étant montés rotatifs sur un même arbre 45). Le pignon satellite 44 est en prise avec une roue dentée 46 montée fixe, c'est à dire non tournante (ce pourrait être indifféremment une couronne dentée intérieurement ou extérieurement, ou toute autre disposition convenable). L'arbre 45 est monté sur un porte-satellite 47 entraîné en rotation par un moteur de coupe 48. Le dispositif 4 peut comporter un ou plusieurs autres disques auxiliaires non actifs tels que le disque auxiliaire 49, avec pignon(s) satellite(s) correspondant(s), notamment pour des questions d'équilibrage.

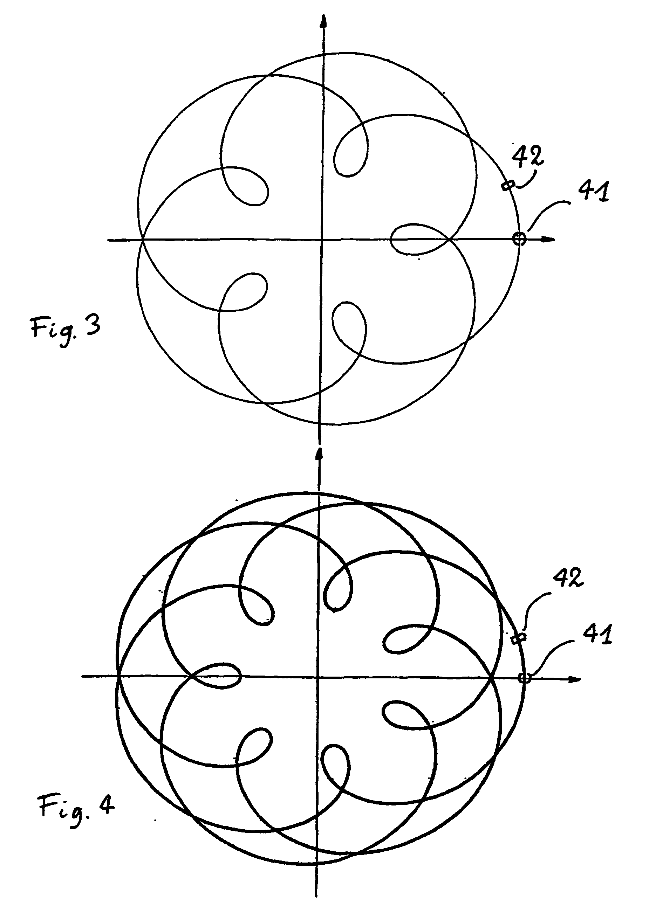

Ainsi, à chaque tour du porte-satellite 47, le couteau 42 peut décrire plusieurs tours, selon la démultiplication due au rapport entre le nombre de dents du pignon satellite 44 et de la roue dentée 46. Remarquons en outre que, selon le rapport choisi, le couteau ne se présentera au point de coupe devant l'extrémité 41 que au bout d'un certain nombre de tours du porte-satellite 47. La figure 3 illustre la trajectoire du couteau 42 dans le cas où il repasse au point de coupe tous les deux tours du porte-satellite 47 et la figure 4 illustre la trajectoire du couteau 42 dans le cas où il repasse au point de coupe tous les trois tours du porte-satellite 47.

Grâce à cet effet de démultiplication et au choix possible du nombre de tours du porte-satellite entre deux actions du couteau 42, il est possible de concilier de grandes vitesses du couteau 42 avec une vitesse de défilement du fil relativement faible. On peut donc adapter très facilement la longueur des tronçons 30 de fil posés sur le support 1 en choisissant judicieusement le rapport de démultiplication dont il a été question ci-dessus. En outre, la coupe à grande vitesse facilite la coupe de fibres plus difficiles à couper comme par exemple l'aramide.

Il est important de noter que la coupe n'arrête le fil 3 qu'un instant aussi bref que possible. On n'a donc pas de problème d'accumulation de fil continuant à être poussé par les galets 20 et 21 en amont du couteau 42. Bien que, au moment où le fil 3 est sectionné, celui-ci se trouve immobilisé un très bref instant, la coupe proposée par l'invention est si rapide que le guide tubulaire 40, ne fusse que par le jeu permettant le coulissement du fil 3, peut contenir momentanément la quantité de fil 3 qui continue à être propulsé par les galets 20, 21.

Après la coupe, le tronçon 30 de fil ne bénéficie plus de la motorisation par les galets 20 et 21 installée en amont. C'est pourquoi de préférence on règle l'écart entre le point de coupe et le point de pose de façon à ce que la dernière extrémité du fil 3 créée par la coupe précédente rejoigne le point de pose sur le support 1 juste avant que le fil 3 ne soit à nouveau coupé. Après la coupe, le mouvement du tronçon 30 est causé par la rotation du support 1 sur lequel il adhère. Afin d'assurer de façon positive l'avance des tronçons de fil libérés par la coupe, il convient de préférence que la distance entre le point de contact du galet d'applique sur le support et le point de coupe correspondant au maximum à la longueur des tronçons. Soulignons que si l'énergie cinétique accumulée par les tronçons est suffisante, il est possible d'assurer le fonctionnement de la machine décrite même si la distance entre le point de contact du galet d'applique sur le support et le point de coupe est supérieure au maximum évoqué ci-dessus.

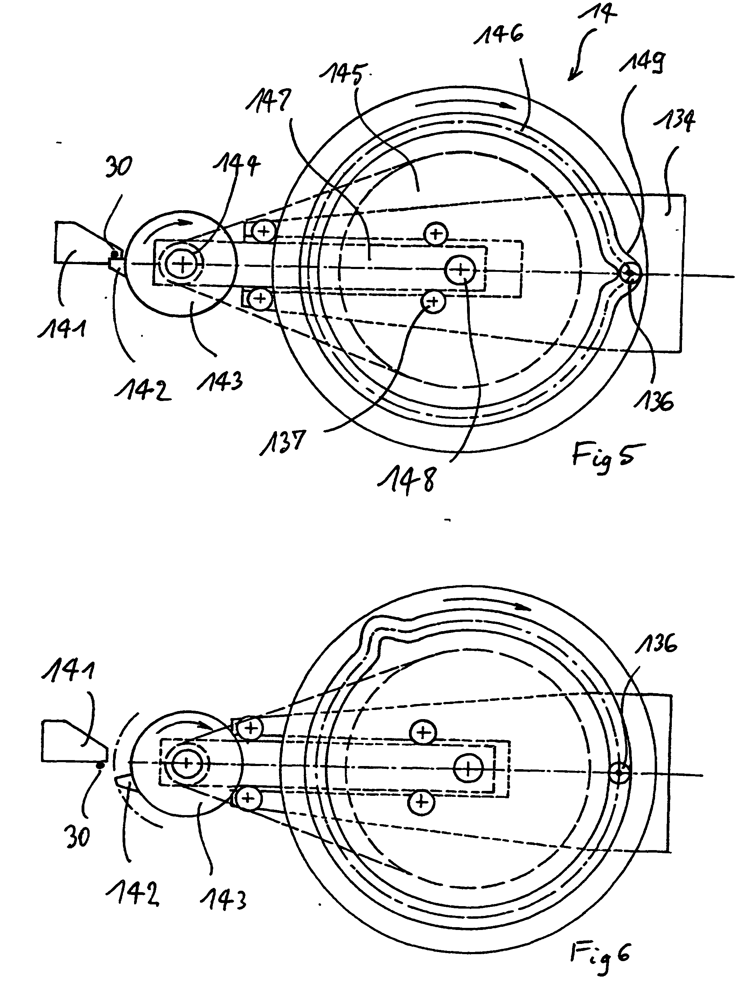

Au figures 5 et 6, on a représenté un dispositif de coupe 14 constituant un autre mode de réalisation pouvant se substituer au dispositif de coupe 4 de la figure 1. Le dispositif de coupe 14 est monté sur une tête de pose 134. Il comporte un guide comparable au guide 40, le long duquel ledit renfort est introduit, l'extrémité 141 dudit guide définissant un point de coupe du renfort. On voit un couteau 142 monté sur un disque 143 rotatif, entraîné en rotation par un pignon 145 (via une courroie), le pignon 145 étant solidaire en rotation d'une came 146. Un barreau 147 supporte l'axe 144 du disque 143 et l'axe 148 de l'ensemble formé par la came 146 et le pignon 145. Le barreau 147 est guidé par des galets 137 montés sur la tête de pose 134. La came 146 et le disque 143 sont ainsi montés coulissant par rapport à la tête de pose 134. La came comporte un bossage 149, et elle coopère avec un pion 136 solidaire de la tête de pose 134. Le couteau 142 est entraîné en permanence à vitesse élevée. Il est en position inactive à la figure 6 et, au moment voulu, avance vers le fil 3 pour le couper (voir figure 5). Le dispositif de coupe 14 est donc agencé de façon à ce que le couteau 142 décrive une trajectoire qui croise le renfort audit point de coupe lorsque le bossage 149 de la came est engagé sur le pion (136).

A la lumière de cette description, l'homme du métier pourra facilement réaliser des variantes et utiliser des adaptations sans sortir du cadre de la présente invention. On peut souhaiter par exemple poser des fils en matière textile. Tous les fils ne présentant aucune résistance à la compression doivent impérativement être maintenus bien tendus. On peut utiliser, partout où cela est nécessaire, une propulsion pneumatique du genre de celle apparaissant sous la référence 56 dans le brevet US 3 894 906.

## Revendications

1. Procédé de fabrication d'un renforcement pour pneumatique, ledit renforcement étant constitué à partir d'un renfort délivré par des moyens d'alimentation imposant au renfort un mouvement d'avance à une vitesse linéaire donnée dans la direction longitudinale du renfort, consistant à déposer des tronçons dudit renfort sur un support, à retenir lesdits tronçons sur le support par adhérence sur celui-ci, lesdits tronçons étant prélevés en aval des moyens d'alimentation de la façon suivante :
• faire coulisser ledit renfort dans un guide dont un orifice définit un point de coupe,
• entraîner au moyen d'une commande par arbre rotatif un couteau selon une trajectoire fermée quelconque amenant le couteau à passer dans l'environnement du point de coupe, le couteau étant actif au point de coupe tous les n passages, avec n supérieur ou égal à deux.

2. Procédé selon la revendication 1, dans lequel la trajectoire est comprise dans un plan.

3. Procédé selon la revendication 1, dans lequel le renfort est appliqué sur le support par un galet d'applique en appui sur le support, ledit galet étant entraîné en rotation par le mouvement du support, la distance entre le point de contact du galet d'applique sur le support et le point de coupe correspondant au maximum à la longueur des tronçons.

4. Machine de fabrication d'un renforcement pour pneumatique, comportant un distributeur de renfort imposant à un renfort un mouvement d'avance à une vitesse linéaire donnée dans la direction longitudinale du renfort, et un dispositif de coupe (4 ou 14) comportant :
• un guide guidant ledit renfort, l'extrémité (41 ou 141) aval dudit guide définissant un point de coupe du renfort,
• un couteau (42 ou 142) monté sur un disque rotatif (43 ou 143)
**caractérisé en ce que** le disque est commandé par une cinématique appropriée pour faire tourner ledit couteau à très haute vitesse et appropriée pour faire en sorte que le couteau ne soit pas actif à chaque passage près du renfort, ledit dispositif de coupe étant agencé de façon à ce que le couteau décrive une trajectoire qui croise le renfort audit point de coupe et **en ce que** la machine comporte des moyens d'application recevant le renfort en aval du point de coupe, l'acheminant jusqu'à un point de pose du renfort sur un support de fabrication du renforcement.

5. Machine selon la revendication 4, dans laquelle la cinématique appropriée est réalisée par le montage dudit disque rotatif (43) autour d'un arbre entraîné en rotation par un pignon satellite (44) en prise sur une roue dentée fixe (46), le pignon satellite (44) étant entraîné par un porte satellite (47) de façon à ce que le pignon satellite roule sur la roue dentée fixe.

6. Machine selon la revendication 4, dans laquelle le dispositif de coupe (14) est monté sur une tête de pose (134) et dans laquelle la cinématique appropriée est réalisée par le fait que ledit disque rotatif (143) est entraîné en rotation par un pignon (145), le pignon (145) étant solidaire en rotation d'une came (146), la came et le disque étant montés coulissant par rapport à la tête de pose (134), la came comportant un bossage (149) et coopérant avec un pion (136) solidaire de la tête de pose (134), ledit dispositif de coupe étant agencé de façon à ce que le couteau décrive une trajectoire qui croise le renfort audit point de coupe lorsque le bossage (149) de la came est engagé sur le pion (136).

7. Machine selon l'une des revendications 4 à 6, dans laquelle les moyens d'application comprennent un galet d'applique (5) disposé de façon à agir sur le renfort au point de pose.

8. Machine selon l'une des revendications 4 à 7 dans laquelle le guide est tubulaire.

## Patentansprüche

1. Verfahren zur Herstellung einer Verstärkung für Luftreifen, wobei die Verstärkung von einem Verstärkungselement gebildet wird, das mit Zubringern zugeführt wird, die das Verstärkungselement in eine Vorschubbewegung mit einer gegebenen linearen Geschwindigkeit in Längsrichtung des Verstärkungselements versetzen, wobei das Verfahren darin besteht, Teilstücke des Verstärkungselements auf einen Träger zu legen und die Teilstücke durch Haftung auf dem Träger auf diesem festzuhalten, wobei die Teilstücke unterhalb der Zubringer wie folgt entnommen werden:
• Das Verstärkungselement wird in einer Führungsvorrichtung gleiten gelassen, wobei eine Öffnung der Führung einen Schneidepunkt definiert;
• ein Schneidmesser wird mit Hilfe einer rotierenden Antriebswelle gemäß einer beliebigen geschlossenen Bahn bewegt, die das Messer durch die Umgebung des Schneidepunkts führt, wobei das Messer bei jeder n-ten Passage am Schneidepunkt zum Einsatz kommt, wobei n größer oder gleich 2 ist.

2. Verfahren nach Anspruch 1, wobei die Bahn in einer Ebene liegt.

3. Verfahren nach Anspruch 1, wobei das Verstärkungselement mit einer Aufliegerolle auf den Träger aufgebracht wird, die sich in Auflage an dem Träger befindet, wobei die Rolle durch die Bewegung des Trägers in Rotation versetzt wird und wobei der Abstand zwischen dem Kontaktpunkt der Aufliegerolle mit dem Träger und dem entsprechenden Schneidepunkt höchstens der Länge der Teilstücke entspricht.

4. Maschine zur Herstellung einer Verstärkung für Luftreifen, die einen Verteiler für ein Verstärkungselement, der ein Verstärkungselement in eine Vorschubbewegung mit einer gegebenen linearen Geschwindigkeit in Längsrichtung des Verstärkungselements versetzt, und eine Schneidevorrichtung (4 oder 14) aufweist, die:
• eine Führung, die das Verstärkungselement leitet, wobei das untere Ende (41 oder 141) der Führung einen Schneidepunkt für das Verstärkungselement definiert, und
• ein Schneidmesser (42 oder 142) umfasst, das auf einer rotierenden Scheibe (43 oder 143) montiert ist,
**dadurch gekennzeichnet, dass** die Scheibe in einer Kinematik bewegt wird, die dazu geeignet ist, das Messer mit sehr hoher Geschwindigkeit rotieren zu lassen und dazu, dafür zu sorgen, dass das Messer nicht bei jeder Passage in der Nähe des Verstärkungselements zum Einsatz kommt, wobei die Schneidevorrichtung so aufgebaut ist, dass das Schneidmesser eine Bahn beschreibt, die das Verstärkungselement an dem Schneidepunkt kreuzt, und **dadurch**, **dass** die Maschine Elemente zum Aufbringen aufweist, die das Verstärkungselement unterhalb des Schneidepunkts aufnehmen und es bis zu einem Punkt befördern, an dem das Verstärkungselement auf einen Träger zur Fertigung der Verstärkung gelegt wird.

5. Maschine nach Anspruch 4, wobei die geeignete Kinematik durch Montage der rotierenden Scheibe (43) auf einer Welle erzielt wird, die mit einem Planetenrad (44) in Rotation versetzt wird, das mit einem festgestellten Zahnrad (46) in Eingriff ist, wobei das Planetenrad (44) durch einen Planetenträger (47) so angetrieben wird, dass sich das Planetenrad auf dem festgestellten Zahnrad bewegt.

6. Maschine nach Anspruch 4, wobei die Schneidevorrichtung (14) auf einem Auflegekopf (134) montiert ist und wobei die geeignete Kinematik dadurch erzielt wird, dass die rotierende Scheibe (143) durch ein Ritzel (145) in Rotation versetzt wird, wobei das Ritzel (145) in Rotation mit einer Kurve (146) fest verbunden ist, wobei die Kurve und die Scheibe bezogen auf den Auflegekopf (134) gleitend montiert sind und wobei die Kurve einen Vorsprung (149) aufweist und mit einem Stift (136) zusammenwirkt, der mit dem Auflegekopf (134) verbunden ist, wobei die Schneidevorrichtung so aufgebaut ist, dass das Schneidmesser eine Bahn beschreibt, die das Verstärkungselement an dem Schneidepunkt kreuzt, wenn der Vorsprung (149) der Kurve an dem Stift (136) einrastet.

7. Maschine nach einem der Ansprüche 4 bis 6, wobei die Elemente zum Aufbringen eine Aufliegerolle (5) umfassen, die so angeordnet ist, dass sie am Auflegepunkt auf das Verstärkungselement wirkt.

8. Maschine nach einem der Ansprüche 4 bis 7, wobei die Führung röhrenförmig ist.

## Claims

1. Method of manufacture of a tyre reinforcement, said reinforcement being made from a reinforcing element delivered by feed means imposing on the reinforcement a forward movement at a given linear speed in the longitudinal direction of the reinforcing element, consisting of depositing sections of said reinforcing element on a support and retaining said sections on the support by adherence to the latter, said sections being taken up downstream of the feed means as follows:
• sliding said reinforcing element in a guide, one orifice of which defines a cutting point,
• driving a knife by means of a rotary-shaft control along any closed path bringing the knife into the environment of the cutting point, the knife being active at the cutting point every n passages, n being greater than or equal to two.

2. Method according to Claim 1, in which the path lies within a plane.

3. Method according to Claim 1, in which the reinforcing element is applied to the support by an application roller bearing on the support, said roller being driven in rotation by the movement of the support, the distance between the point of contact of the application roller on the support and the cutting point corresponding at most to the length of the sections.

4. Machine for manufacture of a tyre reinforcement, comprising a reinforcing-element distributor imposing on a reinforcing element a forward movement at a given linear speed in the longitudinal direction of the reinforcing element, and a cutting device (4 or 14) comprising.
• a guide which guides said reinforcing element, the downstream end (41 or 141) of said guide defining a cutting point of the reinforcing element,
• a knife (42 or 142) mounted on a rotary disc (43 or 143),
**characterised in that** the disc is controlled by kinematics appropriate for turning said knife at very high speed and appropriate for ensuring that the knife is not active upon each pass close to the reinforcing element, said cutting device being set up so that the knife describes a path which crosses the reinforcing element at said cutting point, and **in that** the machine comprises application means receiving the reinforcing element downstream of the cutting point, channelling it to a point for laying the reinforcing element on a support for manufacture of the reinforcement.

5. Machine according to Claim 4, in which the appropriate kinematics are brought about by mounting said rotary disc (43) about a shaft driven in rotation by a planet gear (44) engaged on a fixed toothed wheel (46), the planet gear (44) being driven by a planet carrier (47) such that the planet gear rolls on the fixed toothed wheel.

6. Machine according to Claim 4, in which the cutting device (14) is mounted on a laying head (134) and in which the appropriate kinematics are brought about by the fact that said rotary disc (143) is driven in rotation by a gear (145), the gear (145) being integral in rotation with a cam (146), the cam and the disc being mounted sliding relative to the laying head (134), the cam comprising a boss (149) and cooperating with a pin (136) integral with the laying head (134), said cutting device being set up so that the knife describes a path which crosses the reinforcing element at said cutting point when the boss (149) of the cam is engaged on the pin (136).

7. Machine according to one of Claims 4 to 6, in which the application means comprise an application roller (5) set up to act on the reinforcing element at the laying point.

8. Machine according to one of Claims 4 to 7, in which the guide is tubular.
